# DEMANDE DE BREVET EUROPEEN

(11) **EP 0 638 359 A1**
(43) Date de publication de la demande: **15.02.1995**
(21) Numéro de dépôt: 94202221.1
(22) Date de dépôt: 29.07.1994
(51) Int. Cl.: B01J 21/06, B01J 37/03, C08F 4/22, C08F 4/02

(54) **Procédé de préparation d'un support catalytique, catalyseur supporté pour la polymérisation d'oléfines et procédé pour la polymérisation d'oléfines en présence de ce catalyseur**

(30) Priorité: 12.08.1993 BE 9300835
(71) Demandeur: SOLVAY (Société Anonyme), B-1050 Bruxelles (BE)
(72) Inventeur: Koch, Benoît, B-4280 Hannut (BE); Castillo Cordoba, Rodolfo A., Bogota (CO); Ruiz, Patricio, B-1340 Ottignies (BE); Delmon, Bernard, B-1342 Ottignies/Louvain-la-Neuve (BE)
(74) Mandataire: Marckx, Frieda

(57) **Abrégé**

Procédé de préparation d'un support catalytique selon lequel on imprègne une poudre minérale comprenant de la silice avec une solution, dans un alcool, d'un alcoolate d'un métal de transition choisi parmi les groupes IVB et VB du tableau périodique, le radical hydrocarboné de l'alcool étant identique à au moins un radical hydrocarboné de l'alcoolate, on recueille à l'issue de l'imprégnation une suspension dont on évapore la phase liquide jusqu'à l'obtention d'un solide, puis on sèche le solide ainsi obtenu et on calcine le solide séché.

Catalyseur pour la polymérisation d'oléfines contenant du chrome déposé sur un tel support catalytique.

## Description

La présente invention concerne un procédé de préparation d'un support catalytique, un catalyseur supporté utilisable pour la polymérisation d'oléfines et un procédé pour la polymérisation d'oléfines en présence de ce catalyseur. Elle concerne en particulier un procédé de préparation d'un support comprenant de la silice imprégné, par exemple, au titane et un catalyseur comprenant du chrome déposé sur un tel support.

Il est généralement connu de préparer des catalyseurs supportés par la voie d'imprégnation au moyen d'une solution d'un composé contenant l'élément actif du catalyseur dans un solvant organique, tel que décrit dans le brevet US-3622521 (PHILLIPS PETROLEUM COMPANY). Une des préoccupations dans le développement d'un tel procédé utilisant des solvants organiques, est, d'une part, de réduire les volumes d'effluents de solvants et, d'autre part, de faciliter leur recyclage. A cet effet, il est recommandé d'éviter l'utilisation ou la génération d'un mélange de plusieurs composés organiques différents, qui est plus difficile à recycler.

On a déjà proposé dans la publication intitulée "Titania-modified hydrodesulphurization catalysts - Effect of preparation techniques on morphology and properties of TiO₂-Al₂O₃ carrier" (Applied Catalysis, volume 63, pages 305-317, 1990) de préparer un support en alumine imprégné au titane, en mélangeant de l'alumine avec une solution de tétraisopropylate de titane dans l'isopropanol, en évaporant l'isopropanol jusqu'à l'obtention d'un solide, en exposant le solide à l'air, en séchant le solide et puis en le calcinant. L'alumine imprégnée au titane ainsi obtenue est utilisable comme support pour un catalyseur au molybdène dans un procédé d'hydrodésulphuration.

Toutefois, le support obtenu au moyen de ce procédé connu s'avère peu approprié pour la fabrication d'un catalyseur contenant du chrome déposé sur le support catalytique destiné à la polymérisation d'oléfines. En effet, un tel catalyseur supporté présente une faible activité catalytique en polymérisation.

L'invention vise à remédier à l'inconvénient précité en fournissant un procédé nouveau pour la préparation d'un support catalytique imprégné avec un métal de transition, qui est utilisable pour la préparation d'un catalyseur au chrome, et qui, lorsque ce catalyseur est mis en oeuvre dans la polymérisation d'oléfines, confère à ce catalyseur notamment une activité catalytique élevée. L'invention a également pour objet de fournir un procédé d'obtention d'un support catalytique, dans lequel la séparation du support du milieu liquide utilisé pour son imprégnation est aisée, et dans lequel les effluents liquides générés sont facilement recyclés.

En conséquence, l'invention concerne un procédé de préparation d'un support catalytique selon lequel on imprègne une poudre minérale avec une solution, dans un alcool, d'un alcoolate d'un métal de transition choisi parmi les métaux des groupes IVB et VB du tableau périodique, le radical hydrocarboné de l'alcool étant identique à au moins un radical hydrocarboné de l'alcoolate, on recueille à l'issue de l'imprégnation une suspension dont on évapore la phase liquide jusqu'à l'obtention d'un solide, puis on sèche le solide ainsi obtenu et on calcine le solide séché, ledit procédé étant caractérisé en ce que la poudre minérale comprend de la silice.

Dans le procédé selon l'invention, la poudre minérale imprégnée en vue de la préparation du support catalytique comprend donc nécessairement de la silice. Elle peut éventuellement comprendre une autre substance minérale, choisie, par exemple, parmi les oxydes minéraux tels que les oxydes d'aluminium, de titane, de zirconium, de thorium et de chrome, leurs mélanges et les oxydes mixtes tels que le silicate d'aluminium et le phosphate d'aluminium et parmi les halogénures minéraux tels que le chlorure de magnésium. De préférence, la poudre minérale comprend au moins 75 % en poids de silice, en particulier au moins 85 % en poids, par exemple 95 % en poids. Une poudre minérale constituée essentiellement, le plus souvent exclusivement de silice convient particulièrement bien.

Dans le procédé selon l'invention, la poudre minérale présente généralement une surface spécifique au moins égale à 100 m²/g, typiquement au moins égale à 150 m²/g; elle ne dépasse pas de préférence 800 m²/g, en particulier 600 m²/g, les valeurs de 200 à 400 m²/g étant les plus recommandées. Habituellement, la poudre minérale mise en oeuvre présente un volume poreux de 0,5 à 4 cm³/g, de préférence de 1 à 3 cm³/g, par exemple d'environ 2 cm³/g.

Avant de mettre en oeuvre la poudre minérale dans le procédé selon l'invention, on peut éventuellement la soumettre à un prétraitement tel qu'une calcination ou un séchage.

Dans le procédé selon l'invention, le métal de transition mis en oeuvre sous la forme d'un alcoolate est choisi parmi les éléments des groupes IVB et VB du tableau périodique publié dans "Handbook of Chemistry and Physics", 50 ème édition, page B-3, 1969-1970. On peut citer comme exemples typiques de tels éléments le titane, le zirconium, l'hafnium, le vanadium et leurs mélanges. Les éléments du groupe IVB sont spécialement préférés. Il s'agit en particulier du titane et du zirconium. On obtient des résultats particulièrement avantageux avec le titane.

L'alcoolate mis en oeuvre dans le procédé selon l'invention peut se présenter indifféremment sous la forme d'une poudre ou sous la forme d'un liquide.

L'alcool utilisé dans le procédé selon l'invention a pour fonction de diluer ou, le cas échéant, de dissoudre l'alcoolate du métal de transition et de former ainsi une solution de cet alcoolate, qui permette d'imprégner la poudre minérale avec l'alcoolate.

L'alcool et l'alcoolate mis en oeuvre sont par ailleurs choisis de manière à ce que le radical hydrocarboné de l'alcool soit identique à au moins un des radicaux hydrocarbonés de l'alcoolate, que l'alcool soit liquide dans les conditions de l'imprégnation et qu'il soit miscible avec l'alcoolate utilisé, ou, le cas échéant, que l'alcoolate utilisé y soit soluble.

L'identité des radicaux hydrocarbonés de l'alcoolate et de l'alcool conduit à recueillir ultérieurement par évaporation de la phase liquide après imprégnation un effluent liquide aisément recyclable.

Dans une forme de réalisation particulièrement avantageuse du procédé selon l'invention, l'alcoolate mis en oeuvre répond à la formule générale M(O-R)ₘ et l'alcool destiné à préparer une solution d'alcoolate est représenté par la formule générale R-OH. Dans ces formules M représente le métal de transition, m désigne la valence de M et R représente un radical hydrocarboné monovalent. R peut être choisi parmi les radicaux hydrocarbonés aliphatiques, linéaires ou ramifiés, les radicaux cycliques, aromatiques ou aliphatiques, saturés ou insaturés, non substitués ou substitués, et comprend typiquement jusqu'à 20 atomes de carbone, en particulier jusqu'à 12 atomes de carbone. Les radicaux hydrocarbonés aliphatiques sont spécialement recommandés; les radicaux hydrocarbonés aliphatiques saturés, à chaîne droite ou ramifiée, sont préférés, tels que, par exemple, les radicaux méthyle, éthyle, n-propyle, iso-propyle, n-butyle et iso-butyle. Tout particulièrement préféré est le radical iso-propyle.

A titre d'exemples d'alcoolates de métaux particulièrement préférés, on peut citer le tétraméthylate de titane (qui est un solide) ou encore le tétraisopropylate de titane (qui est liquide à température ambiante). Ces alcoolates particulièrement préférés seront mis en oeuvre dans le procédé de l'invention sous la forme d'une solution respectivement dans l'alcool méthylique et dans l'isopropanol.

Dans le procédé selon l'invention on peut également mettre en oeuvre un alcoolate mixte dont les radicaux hydrocarbonés R ne sont pas tous identiques. De même, on peut mettre en oeuvre simultanément plusieurs alcoolates différents. On préfère toutefois mettre en oeuvre un seul alcoolate de formule générale M(O-R)ₘ telle que définie ci-dessus dont les radicaux hydrocarbonés R sont tous identiques.

La solution mise en oeuvre dans l'étape d'imprégnation du procédé selon l'invention, peut être obtenue par tout moyen connu adéquat. Elle peut par exemple être obtenue par simple mélange préalable de l'alcool et de l'alcoolate. On incorpore en général dans le mélange une quantité d'alcoolate suffisante, dont la totalité est miscible avec l'alcool ou, le cas échéant, soluble dans celui-ci, pour permettre une dispersion homogène de l'alcoolate sur la surface de la poudre minérale. En outre, la quantité d'alcoolate mise en oeuvre doit être suffisante pour pouvoir imprégner la poudre minérale de manière à recouvrir la surface totale de la poudre minérale avec une couche monoatomique du métal de transition. Cependant, la quantité d'alcoolate ne peut pas être trop élevée afin d'éviter la formation d'aggrégats comprenant le métal de transition à la surface de la poudre minérale. En pratique, il est souhaitable de ne pas dépasser largement la quantité minimale nécessaire pour imprégner la surface totale de la poudre minérale avec une couche monoatomique de l'alcoolate. La quantité appropriée d'alcoolate à mettre en oeuvre dépend dès lors notamment de la granulométrie de la poudre minérale et du nombre de sites actifs sur la surface de la poudre minérale capables de capter le métal de transition, ainsi que de la température et de la pression auxquelles l'imprégnation est effectuée et de la durée de l'imprégnation. Elle sera donc avantageusement déterminée dans chaque cas particulier par des essais préliminaires. En pratique, les quantités d'alcoolate mises en oeuvre sont avantageusement telles que le support catalytique imprégné présente une teneur en métal de transition, exprimée en oxyde, au moins égale à 0,1 % en poids, les teneurs en métal de transition d'au moins 1 % en poids exprimées en oxyde étant préférées. La teneur en métal de transition est le plus souvent au plus égale à 30 % en poids, exprimée en oxyde de métal de transition, les valeurs inférieures ou égales à 20 % en poids étant les plus recommandées. Les quantités d'alcoolate tout particulièrement préférées sont telles que la teneur du support catalytique imprégné en métal de transition, exprimée en oxyde, soit de 2 à 11 % en poids, typiquement environ de 4 à 10 % en poids.

En général, l'alcoolate de métal de transition et l'alcool ne contiennent pas d'eau de sorte que la solution mise en oeuvre dans l'étape d'imprégnation du procédé selon l'invention est exempte de traces d'eau. Un composé polymérique du métal de transition pourrait en effet se former suite à une réaction entre l'acoolate de métal de transition et l'eau, ce composé polymérique conduisant à une dispersion du métal de transition sur la surface de la poudre minérale moins favorable à l'obtention d'un catalyseur au chrome pour la polymérisation d'oléfines.

Dans le procédé selon l'invention, la quantité d'alcool mise en oeuvre n'est pas critique et sera adaptée dans chaque cas particulier à la quantité d'alcoolate mise en oeuvre. En pratique, la quantité d'alcool est avantageusement au moins égale et de préférence supérieure à la quantité minimale nécessaire pour préparer une solution de l'alcoolate permettant de mouiller la surface totale de la poudre minérale. Par ailleurs, dans le cas où l'alcoolate se présente sous la forme d'un solide, on a également intérêt à mettre en oeuvre une quantité d'alcool suffisante pour permettre une dissolution complète de l'alcoolate dans l'alcool. En règle générale, afin de favoriser le contact entre l'alcoolate et la poudre minérale, d'une part, et de minimaliser le volume des effluents, d'autre part, on met en oeuvre une quantité d'alcool qui n'excède pas largement la quantité minimale nécessaire.

Dans le procédé selon l'invention l'imprégnation consiste à mettre la poudre minérale en contact avec une solution d'alcoolate d'un métal de transition. Elle peut être réalisée selon tous les moyens connus adéquats, pourvu que le contact entre la poudre minérale et la solution de l'alcoolate soit favorisé de manière à recouvrir la surface de la poudre minérale avec l'alcoolate. On peut par exemple l'effectuer dans un mélangeur statique muni d'un agitateur ou dans un mélangeur rotatif.

La température à laquelle l'imprégnation est effectuée, est en général supérieure à 0 °C et, par ailleurs, inférieure à la température d'ébullition de l'alcool et de décomposition de l'alcoolate. L'imprégnation peut être effectuée indifféremment sous pression réduite, atmosphérique ou élevée. Le plus souvent, elle est effectuée à la pression atmosphérique. A cette pression, on opère typiquement à une température d'environ 0 à 180 °C, de préférence de 10 à 100 °C, par exemple de 15 à 80 °C. La température ambiante convient particulièrement bien.

La durée de l'imprégnation doit être suffisante pour permettre une imprégnation efficace de la surface globale de la poudre minérale. Toutefois, elle ne peut pas dépasser le seuil au delà duquel se forment, à la surface de la poudre, des aggrégats comprenant le métal de transition. La durée dépend dès lors de la quantité d'alcoolate mise en oeuvre, de la granulométrie de la poudre minérale et de la température de l'imprégnation. La durée optimale sera donc avantageusement évaluée pour chaque cas pratique par des essais préliminaires. Pour fixer les idées, elle est en général au moins égale à 1 min, typiquement au moins égale à 1 h. En pratique, on n'a pas intérêt à dépasser une durée de 48 h. Les durées de 2 à 10 h sont les plus courantes.

A l'issue de l'imprégnation, on recueille une suspension comprenant notamment l'alcool, la poudre minérale imprégnée de l'alcoolate et éventuellement le résidu d'alcoolate non adsorbé à la surface de la poudre minérale.

Dans le procédé selon l'invention, l'imprégnation est suivie d'une étape d'évaporation de la phase liquide de la suspension issue de l'imprégnation, qui a pour fonction d'éliminer l'alcool mis en oeuvre à l'imprégnation ainsi que toute autre substance liquide pouvant être générée au cours de l'imprégnation. Cette étape consiste à réchauffer la suspension issue de l'imprégnation. L'évaporation peut être effectuée à pression atmosphérique ou sous presssion réduite. On opère de préférence, à la pression atmosphérique, à une température au moins égale, mais de préférence supérieure à la température d'ébullition de l'alcool. On obtient en général de bons résultats lorsque la température est supérieure d'au moins 5 °C, de préférence d'au moins 20 °C, plus particulièrement d'au moins 40 °C à la température d'ébullition de l'alcool. En général, à la pression atmosphérique, cette température ne dépasse pas 200 °C. Par exemple, on peut opérer l'évaporation à une température de 30 à 150 °C environ, typiquement de 50 à 100 °C environ, par exemple aux environs de 80 °C. La durée de l'évaporation doit être suffisante pour permettre une élimination complète de la phase liquide issue de l'imprégnation. Elle est habituellement comprise entre 1 min et 5 h. Les durées de 5 min à 2 h sont les plus courantes. Pendant l'évaporation, on peut éventuellement soumettre la suspension précitée à une agitation. A l'issue de l'évaporation, on recueille un solide. Ce solide contient généralement au maximum 5 % en poids de substances liquides, typiquement au maximum 3 % en poids, les teneurs en substances liquides de 1 à 2 % en poids étant les plus avantageuses.

Dans le procédé selon l'invention, le solide recueilli après évaporation est soumis à un séchage, qui a pour fonction d'éliminer les traces de liquides résiduaires. On poursuit le séchage avantageusement jusqu'à ce que le solide contienne au maximum 1 % en poids de liquides, de préférence moins de 0,5 % en poids, par exemple environ 0,2 % en poids. Le séchage peut par exemple être effectué en chauffant le solide à une température de 100 à 200 °C, de préférence à 120 °C environ. Le séchage peut être réalisé sous pression atmosphérique ou sous pression réduite. On opère de préférence à la pression atmosphérique.

A l'issue du séchage, on recueille un solide séché qu'on soumet à une calcination. Cette calcination a pour fonction d'extraire, à température élevée, les impuretés organiques du solide. Elle est généralement poursuivie jusqu'à ce que le poids du solide reste constant au cours du temps, tout en évitant un frittage du solide. La calcination peut être effectuée sous balayage d'air (de préférence sous air sec) dans un lit fluidisé à une température inférieure à la température de frittage du solide. La température est en général de 300 °C à 1000 °C, typiquement de 350 °C à 800 °C, de préférence de 400 à 600 °C. Dans une forme de réalisation particulière du procédé selon l'invention, la calcination est réalisée en deux étapes successives, la première à une température de 400 à 600 °C et la deuxième à une température de 700 à 900 °C.

Le procédé selon l'invention permet l'obtention de supports catalytiques comprenant de la silice et au moins un métal de transition, le métal de transition étant dispersé de manière homogène sur la surface de la poudre minérale.

Les supports catalytiques obtenus au moyen du procédé selon l'invention trouvent une application particulièrement intéressante code supports de catalyseurs dans la polymérisation d'oléfines, le catalyseur consistant avantageusement en chrome.

L'invention concerne dès lors aussi un catalyseur pour la polymérisation d'oléfines, contenant du chrome déposé sur un support catalytique, le support étant obtenu au moyen du procédé selon l'invention de préparation d'un support décrit ci-dessus. Dès lors, la poudre minérale, la solution, l'alcool, l'alcoolate et le métal de transition utilisés pour la préparation du support catalytique, qui fait partie intégrante du catalyseur selon l'invention, sont conformes à ceux décrits ci-avant. Les conditions opératoires de l'imprégnation, de l'évaporation, du séchage et de la calcination sont conformes à celles décrites ci-avant.

Le support du catalyseur selon l'invention contient avantageusement au moins 0,1 % en poids de métal de transition exprimé en oxyde de métal de transition, les teneurs d'au moins 1 % étant préférées. La teneur en métal de transition est le plus souvent inférieure ou égale à 30 % en poids exprimés en oxyde de métal de transition, les valeurs inférieures ou égales à 20 % en poids étant les plus recommandées. Le support catalytique contient tout particulièrement de 2 à 11 % en poids de métal de transition, typiquement environ de 4 à 10 % en poids exprimés en oxyde de métal de transition.

Le catalyseur peut être obtenu à partir du support catalytique de manière connue en soi, par exemple par imprégnation de la poudre de support avec une solution aqueuse ou organique d'un composé du chrome, suivie d'un séchage en atmosphère oxydante. On peut utiliser à cet effet un composé du chrome choisi, par exemple, parmi les oxydes, l'acétate, le chlorure, le sulfate, le chromate et le bichromate en solution aqueuse, ou encore l'acétylacétonate en solution organique. Après l'imprégnation du support catalytique avec le composé de chrome, le support imprégné est habituellement activé en le chauffant à une température de 400 à 1000 °C environ pour transformer une partie au moins du chrome en chrome hexavalent. L'activation peut éventuellement être effectuée dans plusieurs étapes consécutives, chaque étape étant réalisée à une température différente.

Le catalyseur selon l'invention peut également être obtenu au moyen d'un mélange mécanique de la poudre du support catalytique avec un composé solide du chrome, par exemple de l'acétylacétonate de chrome, en l'absence d'un liquide. Ensuite, ce mélange peut être préactivé à une température inférieure à la température de fusion du composé de chrome avant de l'activer conventionnellement comme décrit ci-dessus.

En variante, le composé du chrome peut également être incorporé à la poudre du support catalytique pendant la fabrication de celle-ci. A cet effet, il peut par exemple être ajouté, en partie ou en totalité, à la poudre minérale mise en oeuvre à l'étape d'imprégnation de manière à imprégner le mélange de la poudre minérale et du composé de chrome avec l'alcoolate.

Dans le catalyseur selon l'invention, le chrome est généralement présent à raison d'environ 0,05 à 10 % en poids, de préférence de 0,1 à 5 % en poids, plus particulièrement de 0,25 à 2 % en poids de chrome sur base du poids total du catalyseur supporté.

Le catalyseur selon l'invention apparaît particulièrement performant dans la polymérisation d'oléfines. En effet, pour cette application, le catalyseur présente l'ensemble des avantages suivants :
- une période d'induction faible de la polymérisation,
- une activité catalytique élevée,
il permet en outre l'obtention de polyoléfines ayant :
- un indice de fluidité élevé,
- un taux de gonflement élevé, et
- une viscosité faible.

Le catalyseur selon l'invention peut être utilisé avantageusement pour la polymérisation d'oléfines de préférence des alpha-oléfines contenant de 2 à 8 atomes de carbone par molécule, et en particulier, pour la polymérisation de l'éthylène en vue de la production d'homopolymères de l'éthylène ou de copolymères de l'éthylène avec un ou plusieurs comonomères sélectionnés parmi les alpha-oléfines et les dioléfines. De préférence, les comonomères du type des alpha-oléfines sont le propylène, le 1-butène, le 1-pentène, le 3-méthyl-1-butène, le 1-hexène, les 3- et 4- méthyl-1-pentènes et le 1-octène. Des dioléfines comprenant de 4 à 18 atomes de carbone peuvent également être copolymérisées avec l'éthylène. De préférence, les dioléfines sont des dioléfines aliphatiques non conjuguées telles que le 4-vinylcyclohexène ou des dioléfines alicycliques ayant un pont endocyclique telles que le dicyclopentadiène, le méthylène- et l'éthylidène-norbornène, et des dioléfines aliphatiques conjuguées telles que le 1,3-butadiène, l'isoprène et le 1,3-pentadiène.

Le catalyseur selon l'invention convient particulièrement bien pour la fabrication d'homopolymères de l'éthylène et de copolymères contenant au moins 90 % en poids, de préférence au moins 95 % en poids d'éthylène. Les comonomères préférés sont le propylène, le 1-butène, le 1-hexène ou le 1-octène.

L'invention concerne dès lors également un procédé pour la polymérisation d'oléfines telles que définies plus haut, mettant en oeuvre un catalyseur conforme à l'invention. Dans le procédé de polymérisation selon l'invention, la polymérisation peut être effectuée indifféremment en solution, en suspension dans un diluant hydrocarboné ou encore en phase gazeuse. On obtient de bons résultats dans les polymérisations en suspension. La polymérisation peut être effectuée en continu ou en discontinu, en un seul réacteur ou dans plusieurs réacteurs disposés en série, les conditions de polymérisation (température, teneur éventuelle en comonomère, teneur éventuelle en hydrogène, type de milieu de polymérisation) dans un réacteur étant différentes de celles utilisées dans les autres réacteurs. Les conditions de polymérisation sont celles habituellement utilisées et bien connues de l'homme du métier.

Les exemples dont la description suit, servent à illustrer l'invention. La signification des symboles utilisés exprimant les grandeurs mentionnées et les méthodes de mesure de ces grandeurs sont explicitées ci-dessous.
- X: = teneur en TiO₂ du support catalytique imprégné exprimée en % en poids.
- T₁: = température de préactivation du catalyseur exprimée en °C.
- P₁: = période de préactivation du catalyseur exprimée en heure.
- T₂: = température d'activation du catalyseur exprimée en °C.
- P₂: = période d'activation du catalyseur exprimée en °C.
- Y: = quantité de polyéthylène obtenue exprimée en gramme.
- α: = activité catalytique exprimée conventionnellement en grammes de polyéthylène insoluble, obtenus par heure et par gramme de catalyseur divisés par la concentration en éthylène.
- t_{ind}: = temps d'induction exprimé en minutes, défini comme étant le temps écoulé entre l'introduction du catalyseur et l'apparition d'une diminution de pression caractéristique du début de polymérisation.
- MI: = indice de fluidité du polyéthylène exprimé en g/10 min et mesuré sous une charge de 2,16 kg à 190 °C selon la norme ASTM D 1238 (1986).
- η: = viscosité dynamique exprimée en dPa.s et mesurée à un gradient de vitesse de 100 s⁻¹ et à 190 °C.
- τ: = taux de gonflement du polyéthylène (sans unité). La méthode de mesure consiste à extruder à 190 °C le polyéthylène au travers d'une filière de dimensions normalisées à une vitesse d'extrusion constante, et à mesurer le déplacement du pis ton nécessaire pour extruder une longueur de jonc de 70 mm. Le taux de gonflement mesuré au moyen d'une filière d'une longueur (L) de 15 mm et d'un diamètre (D) de 1 mm, respectivement au moyen d'une filière dont L est égale à 30 mm et D est égal à 2 mm, est défini par les relations suivantes :
τ = 1,1414 √e
τ = 0,5707 √e,
dans lesquelles e représente le déplacement du piston exprimé en mm.

### Exemples 1 à 5

Dans ces exemples, on a préparé des supports catalytiques en silice imprégnés au titane, que l'on a utilisés pour fabriquer des catalyseurs au chrome. Ensuite, ces catalyseurs ont été mis en oeuvre dans la polymérisation de l'éthylène. Les conditions de préparations des catalyseurs et leurs performances en polymérisation sont mentionnées dans le tableau I repris ci-dessous.

### A - Préparation du support catalytique imprégné

Un support en silice 532 de GRACE présentant une surface spécifique de 320 m²/g a été calciné dans un four à 600 °C pendant 12 h sous air. Le support préactivé ainsi obtenu a ensuite été ajouté, à température ambiante, sous agitation, à une solution de tétraisopropylate de titane dans l'isopropanol. La quantité de tétraisopropylate de titane mise en oeuvre était telle que le support imprégné présentait une teneur en titane, exprimée en dioxyde de titane, égale à X (% en poids) renseignée dans le tableau I. Puis, la phase liquide de la suspension ainsi obtenue a été évaporée à 70 °C à pression atmosphérique dans un four rotatif jusqu'à l'obtention d'un solide. Le solide a ensuite été séché, dans un four, à 120 °C pendant 12 h. Le solide séché a été soumis à une calcination dans le même four à 500 °C pendant 20 h.

### B - Fabrication du catalyseur au chrome

On a mélangé manuellement le support imprégné obtenu en A avec une poudre d'acétylacétonate de chrome en une quantité telle que la teneur en chrome du mélange fût égale à 10 g/kg. Ce mélange a ensuite été placé dans un réacteur à lit fluidisé par de l'air sec et préactivé pendant une période P₁ à la température T₁ telles que renseignées dans le tableau I. Ensuite il a été activé dans le même réacteur sous balayage d'air par traitement thermique à la température T₂ pendant une période P₂ avant d'être ramené à température ambiante.

### C - Polymérisation de l'éthylène

Dans un autoclave de 3 l préalablement séché, et muni d'un agitateur, on a introduit 1 l d'isobutane puis on a élevé la température à 107 °C avant d'y réaliser une pression de 6 bars d'éthylène et d'introduire 100 mg du catalyseur obtenu en B. La pression et la température dans le réacteur en cours de polymérisation ont été maintenues constantes jusqu'à l'obtention d'une quantité Y (g) de polyéthylène.

**TABLEAU I**

| Exemple | 1 | 2 | 3 | 4 | 5 |
|---|---|---|---|---|---|
| Préparation du support catalytique imprégné | | | | | |
| X (% en poids) | 2,0 | 5,2 | 10,3 | 17,8 | 20,9 |

| Fabrication du catalyseur | | | | | |
|---|---|---|---|---|---|
| T₁ | 150 | 150 | 150 | 150 | 150 |
| P₁ | 2 | 2 | 2 | 2 | 2 |
| T₂ | 815 | 815 | 815 | 815 | 815 |
| P₂ | 5 | 5 | 5 | 5 | 5 |

| Polymérisation de l'éthylène | | | | | |
|---|---|---|---|---|---|
| Y | 261 | 250 | 255 | 267 | 250 |
| α | 37268 | 41706 | 23767 | 36075 | 29194 |
| t_{ind} | 14 | 10 | 15 | 16 | 13 |
| MI | 2,01 | 3,12 | 2,85 | 1,90 | 1,35 |
| η | 9150 | 7785 | 8151 | 9055 | 10835 |
| τ | 1,59 | 1,64 | 1,63 | 1,63 | 1,61 |

## Revendications

1. Procédé de préparation d'un support catalytique selon lequel on imprègne une poudre minérale avec une solution, dans un alcool, d'un alcoolate d'un métal de transition choisi parmi les métaux des groupes IVB et VB du tableau périodique, le radical hydrocarboné de l'alcool étant identique à au moins un radical hydrocarboné de l'alcoolate, on recueille à l'issue de l'imprégnation une suspension dont on évapore la phase liquide jusqu'à l'obtention d'un solide, puis on sèche le solide ainsi obtenu et on calcine le solide séché, caractérisé en ce que la poudre minérale comprend de la silice.

2. Procédé selon la revendication 1, caractérisé en ce que la poudre minérale comprend au moins 75 % en poids de silice.

3. Procédé selon la revendication 1 ou 2, caractérisé en ce que la poudre minérale présente une surface spécifique de 100 à 800 m²/g.

4. Procédé selon l'une quelconque des revendications 1 à 3, caractérisé en ce que la poudre minérale présente un volume poreux de 0,5 à 4 cm³/g.

5. Procédé selon l'une quelconque des revendications 1 à 4, caractérisé en ce que le métal de transition est choisi parmi le titane, le zirconium, l'hafnium, le vanadium et leurs mélanges.

6. Procédé selon la revendication 5, caractérisé en ce que le métal de transition est le titane.

7. Procédé selon l'une quelconque des revendications 1 à 6, caractérisé en ce que l'alcoolate est sélectionné parmi les alcoolates répondant à la formule générale M(O-R)ₘ, dans laquelle M représente le métal de transition, m désigne la valence de M et R représente un radical hydrocarboné d'au maximum 20 atomes de carbone.

8. Procédé selon la revendication 7, caractérisé en ce que le radical hydrocarboné est un radical aliphatique saturé, à chaîne droite ou ramifiée.

9. Procédé selon la revendication 8, caractérisé en ce que le radical hydrocarboné est choisi parmi les radicaux méthyle, éthyle, n-propyle, isopropyle, n-butyle et isobutyle.

10. Procédé selon la revendication 9, caractérisé en ce que le radical hydrocarboné est le radical isopropyle.

11. Procédé selon l'une quelconque des revendications 1 à 10, caractérisé en ce qu'on met l'alcoolate en oeuvre en une quantité telle que le support catalytique présente une teneur en métal de transition, exprimée en oxyde, au plus égale à 30 % en poids.

12. Procédé selon la revendication 11, caractérisé en ce que la teneur en métal de transition, exprimée en oxyde, est de 2 à 11 % en poids.

13. Procédé selon l'une quelconque des revendications 1 à 12 , caractérisé en ce que la solution d'imprégnation est exempte de traces d'eau.

14. Catalyseur pour la polymérisation d'oléfines, contenant du chrome déposé sur un support catalytique, le support catalytique étant obtenu par le procédé conforme à l'une quelconque des revendications 1 à 13.

15. Catalyseur selon la revendication 14, caractérisé en ce qu'il contient de 0,05 à 10 % environ en poids de chrome et en ce que le support catalytique contient de 2 à 11 % en poids environ de métal de transition exprimé en oxyde.

16. Procédé pour la polymérisation d'oléfines selon lequel on met en oeuvre un catalyseur conforme à la revendication 14 ou 15.

17. Procédé selon la revendication 16 appliqué à la polymérisation de l'éthylène.
